# EUROPEAN PATENT SPECIFICATION

(11) **EP 2 207 307 B1**
(45) Date of publication and mention of the grant of the patent: **19.02.2014**
(21) Application number: 07855718.8
(22) Date of filing: 19.12.2007
(51) Int. Cl.: H04L 12/24, H04L 12/437, H04L 12/26, H04L 12/42

(54) **Method for processing the failure of the slave port of the master node in an ethernet ring network system**
Verfahren zum Verarbeiten des Ausfalls des Slave-ports des Master-knotens in einem Ethernet-Ring-Netzwerksystem
Procédé de traitement de panne du port esclave du noeud maître dans un système de réseau ethernet en anneau

(30) Priority: 12.10.2007 CN 200710182245
(43) Date of publication of application: 14.07.2010
(73) Proprietor: ZTE Corporation, Shenzhen, Guangdong 518057 (CN)
(72) Inventor: WU, Shaoyong, Shenzhen Guangdong518057 (CN)
(74) Representative: Novagraaf Technologies
(86) International application number: PCT/CN2007/003688
(87) International publication number: WO 2009/046591

(56) References cited:
- CN-A- 1 127 459
- CN-A- 1 812 361
- CN-A- 101 001 192
- CN-A- 101 127 673
- US-A1- 2007 165 517

## Description

### Technical Field

The present invention relates to an Ethernet ring automatic-protection technical field, and more specifically, to a failure processing method for a slave port of a master node in an Ethernet ring system.

### Background Art

An Ethernet ring protection system in RFC3619 is configured into a ring by connection of a plurality of nodes with one another. A plurality of domains, i.e. Ethernet ring protection domains, can be defined on the ring. A domain comprises a master node and several transit nodes, and a group of service virtual local area networks (VLANs) which are protected and used to forward user data, where two ports of the master node on the ring are defined as master port and slave port respectively, and the service VLANs which are protected are defined as protected service VLANs. When links on the ring work well, the master node blocks forwarding function of the protected service VLAN of the slave port so that no ring circuit is formed in the network and "broadcast storm" introduced by the ring circuit in the network is avoided; when a link fails, the master node releases the forwarding function of the protected service VLAN of the slave port so that the user data can pass through the slave port of the master node and connectivity of the service is ensured. In some Ethernet ring protection technique, a master node is also referred to as Ring Protection Link owner, a link connecting directly the slave port of the master node is referred to as Ring Protection Link.

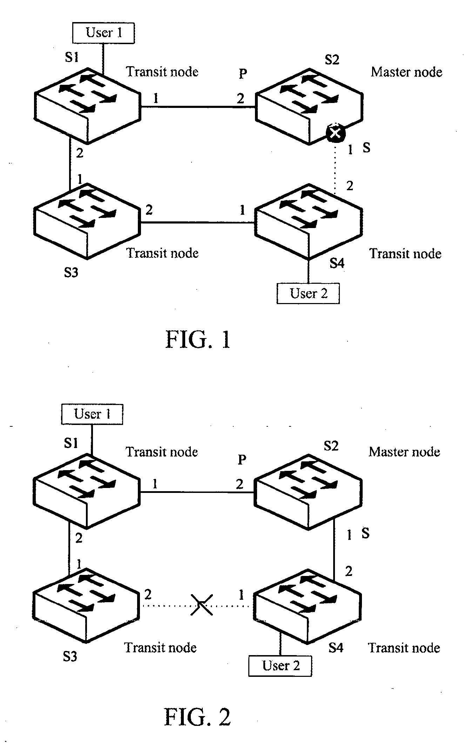

FIG. 1 is a topological diagram of the Ethernet ring automatic protection system in a normal operation state. The system is composed of nodes S1, S2, S3, and S4, and an Ethernet ring protection domain is configured on a ring consisting of the four nodes. In the domain, the master node is S2, and the other nodes S1, S3, and S4 are transit nodes. Two ports of the master node S2 on the ring are master port and slave port respectively, where port 2 is the master port (P), and port 1 is the slave port (S). In addition, a protected service VLAN, in which each port on the ring is configured, is defined in the domain. When the links on the ring works well, the master node S2 blocks the data forwarding function of the protected service VLAN of the slave port 1 to avoid a ring circuit existing in the network and "broadcast storm" occurs; when a link on the ring fails, the master node S2 releases the data forwarding function of the protected service VLAN of the slave port 1 so that the data of the service VLAN are accessible again, as shown in FIG. 2.

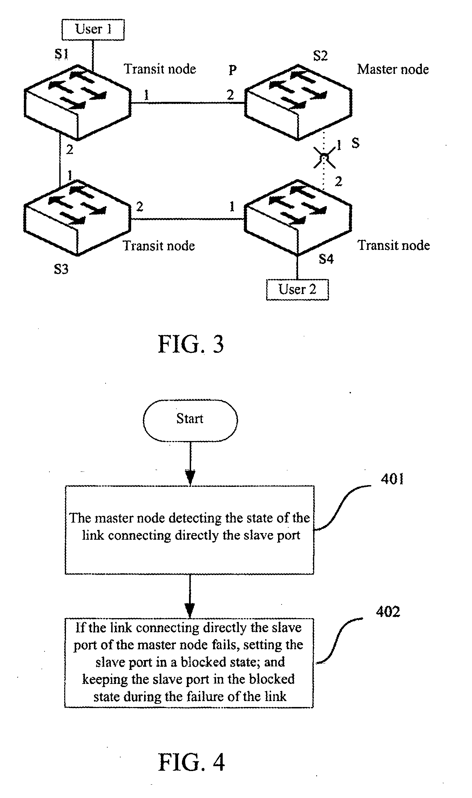

Each node detects whether there is a failure in a link adjacent to said node on the ring, and sends a link failure alarm message to notify the master node that there is a failure in the links when a failure is detected. After receiving the link failure alarm message, the master node releases the data forwarding function of the protected service VLAN of the slave port so that the data in the service VLAN are accessible again. When a link corresponding to the slave port of the master node (i.e. the link connecting directly the slave port) fails, a node at an opposite end relative to the slave port of the master node notifies the master node by sending a link failure alarm message after the node detects the link failure, and then the master node performs link failure handover and releases the data forwarding function of the protected service VLAN of the slave port, as shown in FIG. 3. Since the link connecting the slave port of the master node is in a failure state and the data can not be forwarded, and the slave port is set in a released state, thus there is a port state fault.

The port state fault as mentioned above may result in the following problems:
first, misleading users when the users inquire, because the port is in a released state which means the data can be transmitted, however, the data cannot be transmitted in the current released state;
second, if the link is unidirectional, an opposite end of the slave port of the master node cannot detect the failure of the port, while the slave port of the master node can detect the link failure, in this case, if the slave port of the master node is in a released state and the opposite end of the slave port of the master is also in a released state, no port on the ring is blocked when the link recoveries, which will result in instant loop and broadcast storm.

There is a similar problem in other Ethernet ring protection methods, such as a method disclosed in patent EP1727313.

Chinese patent application CN 1812361A discloses a failure processing method for a slave port of a master node in an Ethernet ring in which when the master node detects the failure of the direct link of its slave port, the slave port is not restored to forward.

### Summary of the Invention

The present invention provides a failure processing method for a slave port of a master node in an Ethernet ring system so as to avoid a port state fault when a link connecting directly the slave port of the master node in the Ethernet ring domain fails.

To solve the above technical problem, the present invention provides a failure processing method for a slave port of a master node in an Ethernet ring system, comprising the following steps of:
(1) the master node detecting a state of a link connecting directly the slave port; and
(2) setting the slave port in a blocked state if the link connecting directly the slave port of the master node fails regardless of whether the Ethernet ring is in a normal state or in a failure state before the failure of the link connecting directly the slave port is detected, and keeping the slave port in the blocked state during the failure of the link.

Furthermore, in the step (1), the master node detects the state of the link connecting directly the slave port by detecting an optical signal.

Furthermore, if no optical signal transmitted by the link connecting directly the slave port is detected by the master node, it is determined that the link connecting directly the slave port is in failure.

Furthermore, in the step (1), a packet is transmitted between the master node and a node at an opposite end of the link connecting directly the salve port to detect the state of the link connecting directly the slave port.

Furthermore, if no detection packet is received from the node at the opposite end by the master node in a period of time, it is determined that the link connecting directly the slave port is in failure.

Furthermore, in the step (2), when the slave port is in the blocked state, data would be discarded if the data is received at the blocked port from a protected virtual local area network, and the data of the protected virtual local area network would not be sent or forwarded to a port of a node at an opposite end.

According to the failure processing method for a slave port of a master node in an Ethernet ring system, when a link connecting directly the slave port of the master node fails, the slave port is set in a blocked state and the slave port is kept in the blocked state during the failure of the link corresponding to the slave port of the master node, so as to ensure the slave port of the master node in a correct state.

### Brief Description of Drawings

FIG. 1 is the topological diagram of an Ethernet ring protection system when links on the ring work well;
FIG. 2 is the topological diagram of an Ethernet ring protection system when a link on the ring fails;
FIG. 3 is the topological diagram of an Ethernet ring protection system when a link connecting the slave port of the master node fails;
FIG. 4 is the flow chart of a failure processing method for a slave port of a master node in an Ethernet ring system according to the present invention;
FIG. 5 is an illustration of an application embodiment of the present invention when a link connecting a slave port of a master node fails;
FIG. 6 is an illustration of an application embodiment of the present invention when a plurality of links on the ring fail.

### Preferred Embodiments of the Present Invention

The idea of the present invention is that a master node in an Ethernet ring would block a slave port when it detects a link directly connecting the slave port fails regardless whether a state of the Ethernet ring is in normal or in failure before a failure of the slave port is detected, and keep the slave port in the blocked state during the failure of the link.

The present invention will be described in detail in conjunction with accompanying drawings and an embodiment in the following.

As shown in FIG. 4, a failure processing method for a slave port of a master node in an Ethernet ring system according to the present invention comprises the following steps of:
step 401, the master node detecting the state of the link connecting directly the slave port;

There are a plurality of detection mechanisms at present which can be used to detect a state of a link. For example, fibers can be used to detect optical signals, and if no optical signal is detected, the link is considered as in failure; alternatively, the detection is performed by transmitting a packet between the master node and the node at the opposite end, and if no detection packet is received from the node at the opposite end in a period of time, the link is considered as in failure.

step 402, if the link directly connecting the slave port of the master node fails, setting the slave port in a blocked state, i.e. blocking the forwarding function of the protected service VLAN of the slave port regardless of whether a state of the Ethernet ring is in normal or in failure before a failure of the slave port is detected; and keeping the slave port in the blocked state during the failure of the link connecting directly the slave port of the master node.

When the slave port is in the blocked state, data would be discarded if the data is received at the blocked port from the protected VLAN, and the data of the protected VLAN would not be sent or forwarded to the port of the node at the opposite end. Of course, Ethernet ring protocol frames are still be allowed to transmit.

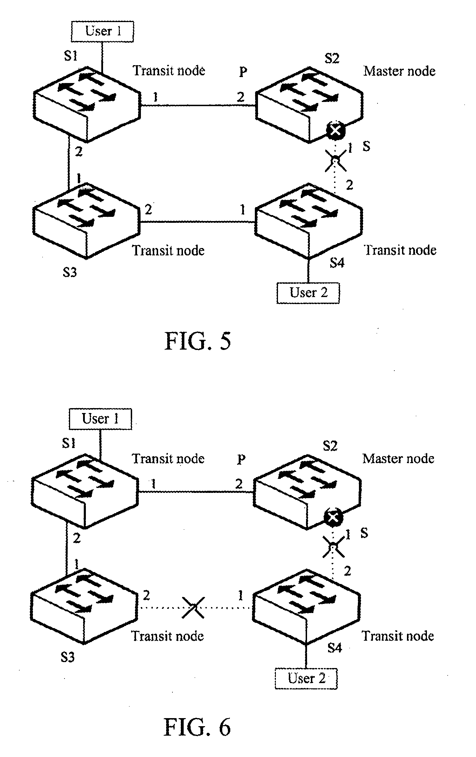

FIG. 5 and FIG. 6 illustrate an application embodiment of the present invention in an Ethernet ring protection system:
there are 3 transmit nodes and 1 master node on the ring, and a link connecting a slave port of the master node fails so that the slave port of the master node is set in a blocked state, as shown in FIG. 5. Another link fails and a link failure alarm message is sent to the master node, and the slave port is still kept in the blocked state since the link connecting the slave port of the master node fails, as shown in FIG. 6.

According to the failure processing method for a slave port of a master node in an Ethernet ring system in accordance with the present invention, the slave port of the master node is kept in the blocked state during the failure of the link corresponding to the slave port so as to avoid the port state fault when the slave port of the master node in the Ethernet ring domain fails, thus avoid misleading the user when the user inquires, and avoid the possibility of a broadcast storm. The present invention can be applied in a plurality of Ethernet ring protection technologies.

The above description is merely a preferred embodiment and do not intend to limit the present invention. In a view of a person skilled in the art, the present invention may have various modifications and variances, which shall fall into the scope of the present invention determined by the claims.

### Industrial Applicability

According to the failure processing method for a slave port of a master node in an Ethernet ring system in accordance with the present invention, when the link connecting the slave port of the master node fails, the slave port is set and kept in the blocked state during the failure of the link corresponding to the slave port so as to avoid the port state fault when the slave port of the master node in the Ethernet ring domain fails, thus avoid misleading the user when the user inquires, and avoid the possibility of a broadcast storm. The present invention can be applied in a plurality of Ethernet ring protection technologies.

## Claims

1. A failure processing method for a slave port of a master node in an Ethernet ring system, comprising the following steps of:
1) the master node detecting a state of a link connecting directly the slave port; and
2) setting the slave port in a blocked state if the link connecting directly the slave port of the master node fails,
**characterized in that**
the setting step is performed regardless of whether the Ethernet ring is in a normal state or in a failure state before the failure of the link connecting directly the slave port is detected, and **in that**
the method further comprises keeping the slave port in the blocked state during the failure of the link.

2. The method of claim 1, wherein in the step 1), the master node detecting the state of the link connecting directly the slave port is performed by detecting an optical signal.

3. The method of claim 2, wherein if no optical signal transmitted by the link connecting directly the slave port is detected by the master node, that the link connecting directly the slave port is in failure is determined.

4. The method of claim 1, wherein in the step 1), detecting the state of the link connecting directly the slave port is performed by transmitting a packet between the master node and a node at an opposite end of the link connecting directly the salve port.

5. The method of claim 4, wherein if no detection packet is received from the node at the opposite end by the master node in a period of time, that the link connecting directly the slave port is in failure is determined.

6. The method of claim 1, wherein in the step 2), when the slave port is in the blocked state, data would be discarded if the data is received at the blocked port from a protected virtual local area network, and the data of the protected virtual local area network would not be sent or forwarded to a port of a node at an opposite end.

## Patentansprüche

1. Verfahren zum Verarbeiten eines Ausfalls für einen Slave-Port eines Master-Knotens in einem Ethernet-Ringsystem, umfassend die folgenden Schritte:
1) Nachweisen eines Zustands einer Verknüpfung, die direkt mit dem Slave-Port verbindet, durch den Master-Knoten, und
2) Einstellen des Slave-Ports in einen blockierten Zustand, wenn die Verknüpfung ausfällt, die direkt mit dem Slave-Port des Master-Knotens verbindet,
**dadurch gekennzeichnet, dass**
der Schritt des Einstellens unabhängig davon durchgeführt wird, ob sich der Ethernet-Ring in einem normalen Zustand oder in einem FehlerZustand befindet, bevor der Ausfall der Verknüpfung, die direkt mit dem Slave-Port verbindet, nachgewiesen wird, und
dadurch, dass
das Verfahren weiter das Halten des Slave-Ports im blockierten Zustand während des Ausfalls der Verknüpfung umfasst.

2. Verfahren nach Anspruch 1, wobei in Schritt 1) der Master-Knoten, der den Zustand der Verknüpfung nachweist, die direkt mit dem Slave-Port verbindet, durch den Nachweis eines optischen Signals durchgeführt wird.

3. Verfahren nach Anspruch 2, wobei, wenn kein optisches Signal, das von der Verknüpfung übertragen wird, die direkt mit dem Slave-Port verbindet, vom Master-Knoten nachgewiesen wird, bestimmt wird, dass die Verknüpfung, die direkt mit dem Slave-Port verbindet, ausgefallen ist.

4. Verfahren nach Anspruch 1, wobei in Schritt 1) der Nachweis des Zustands der Verknüpfung, die direkt mit dem Slave-Port verbindet, durch die Übertragung eines Pakets zwischen dem Master-Knoten und einem Knoten an einem gegenüber liegenden Ende der Verknüpfung, die direkt mit dem Slave-Port verbindet, durchgeführt wird.

5. Verfahren nach Anspruch 4, wobei wenn kein Nachweispaket vom Knoten am gegenüber liegenden Ende durch den Master-Knoten in einem Zeitraum erhalten wird, bestimmt wird, dass die Verknüpfung, die direkt mit dem Slave-Port verbindet, ausgefallen ist.

6. Verfahren nach Anspruch 1, wobei in Schritt 2), wenn sich der Slave-Port in einem blockierten Zustand befindet, Daten abgelegt werden, wenn die Daten am blockierten Port von einem geschützten virtuellen lokalen Netz erhalten werden, und die Daten des geschützten virtuellen lokalen Netzes nicht an einen Port eines Knotens an einem gegenüber liegenden Ende geschickt oder weitergeleitet werden.

## Revendications

1. Procédé de traitement de panne pour un port esclave d'un noeud maître dans un système Ethernet en anneau, comprenant les étapes suivantes :
1) le noeud maître détecte un état d'une liaison connectant directement le port esclave ; et
2) mise du port esclave dans un état bloqué si la liaison connectant directement le port esclave du noeud maître tombe en panne,
**caractérisé en ce que**
l'étape de mise à l'état bloqué est effectuée sans tenir compte si l'anneau Ethernet est dans un état normal ou dans un état de panne avant que la panne de la liaison connectant directement le port esclave a été détectée, et
**en ce que** le procédé comprend en outre le maintien du port esclave dans l'état bloqué durant la panne de la liaison.

2. Procédé selon la revendication 1, dans lequel à l'étape 1), la détection par le noeud maître de l'état de la liaison connectant directement le port esclave est effectuée par la détection d'un signal optique.

3. Procédé selon la revendication 2, dans lequel si aucun signal optique transmis par la liaison connectant directement le port esclave n'est détecté par le noeud maître, il est déterminé que la liaison connectant directement le port esclave est en panne.

4. Procédé selon la revendication 1, dans lequel à l'étape 1), la détection de l'état de la liaison connectant directement le port esclave est effectuée par la transmission d'un paquet entre le noeud maître et un noeud à une extrémité opposée de la liaison connectant directement le port esclave.

5. Procédé selon la revendication 4, dans lequel si aucun paquet de détection n'est reçu du noeud à l'extrémité opposée par le noeud maître durant une certaine période de temps, il est déterminé que la liaison connectant directement le port esclave est en panne.

6. Procédé selon la revendication 1, dans lequel à l'étape 2), lorsque le port esclave est dans l'état bloqué, des données seraient rejetées si les données étaient reçues sur le port bloqué en provenance d'un réseau local virtuel protégé, et les données du réseau local virtuel protégé ne seraient pas envoyées ou transférées à un port d'un noeud à une extrémité opposée.
